# EUROPÄISCHE PATENTSCHRIFT

(11) **EP 2 944 180 B1**
(45) Veröffentlichungstag und Bekanntmachung des Hinweises auf die Patenterteilung: **04.07.2018**
(21) Anmeldenummer: 15167782.0
(22) Anmeldetag: 15.05.2015
(51) Int. Cl.: A01D 43/00, A01D 43/077

(54) **VORRICHTUNG ZUM MÄHEN VON WEIDEN UND FELDERN**
DEVICE FOR MOWING MEADOWS AND FIELDS
DISPOSITIF DE FAUCHAGE DE PRAIRIES ET CHAMPS

(30) Priorität: 15.05.2014 DE 102014007060
(43) Veröffentlichungstag der Anmeldung: 18.11.2015
(73) Patentinhaber: van 't Oever, Edwin, 26931 Elsfleth (DE)
(72) Erfinder: van 't Oever, Edwin, 26931 Elsfleth (DE)
(74) Vertreter: Jabbusch, Matthias

(56) Entgegenhaltungen:
- DE-A1- 1 782 799
- DE-A1-102012 100 972
- FR-A5- 2 083 183
- GB-A- 834 608

## Beschreibung

Die Erfindung betrifft eine Vorrichtung zum Mähen von Weiden und Feldern mit wenigstens einem Mähwerk und wenigstens einer am Mähwerk angeordneten Mähgutabsaugung, wobei das Mähwerk wenigstens einen Scherschneiden aufweisenden Mähbalken hat, und die Mähgutabsaugung in wenigstens einer Reihe parallel zum Mähbalken angeordnete Absaugkammern aufweist.

Derartige Vorrichtungen sind Mähmaschinen, die als Balkenmäher, Spindelmäher oder als Kreiselmäher der Ernte von Gräsern und anderen krautigen Futterpflanzen dienen. Für die industrielle Grasernte kamen im Jahre 1964 die weniger störanfälligen Kreiselmäher auf den Markt, die sich aufgrund ihrer überaus großen Arbeitsbreiten und der daraus resultierenden hohen Flächenleistung allmählich gegen die anderen Mähmaschinen durchgesetzt haben. Für das Erreichen ausreichender Schnittergebnisse werden die Schneidscheiben der Kreiselmäher mit hohen Umfangsgeschwindigkeiten betrieben. Die Kreiselmäher, für die Mähgutwendung eingesetzte Kreiselheuer und für das Mähguteinfahren eingesetzte Schwader führen aufgrund ihrer rotierenden Bewegungen zu hohen Bröckelverlusten und damit nachteilig zu einer erhöhten Verschmutzung des Mähgutes durch vom Erdboden aufgewirbeltes Fremdmaterial. Im Zuge der Intensivtierhaltung ist das Erdreich landwirtschaftlich genutzter Flächen jedoch in zunehmendem Maße mit pathogenen Keimen belastet. Mit den in Kreiselmähern auftretenden Wirbelströmungen ist eine Übertragung der pathogenen Keime aus dem aufgewirbelten Fremdmaterial in das Mähgut hinein jedoch unvermeidbar. Eine derartige Kontamination des Mähgutes mit pathogenen Keimen ist sowohl bei einer Verwendung als Frischfutter als auch bei einer Trocknung des Mähgutes zu Heu problematisch. Besonders problematisch ist jedoch eine Weiterverarbeitung des Mähgutes zu einer Silage. Während des Silierprozesses gebildete Gärsäuren führen nach und nach zu säureresistenteren bzw. säureunempfindlicheren pathogenen Keimen, so dass eine Verfütterung einer aus dem Mähgut hergestellten Silage für die Gesundheit der Tiere überaus bedenklich ist. Die Entwicklung säureresistenterer Keime oder Keimgruppen baut sich innerhalb des landwirtschaftlichen Betriebskreislaufes über die Zeit auf und kann so zum wirtschaftlichen Zusammenbruch eines Betriebes und später auch der die landwirtschaftlichen Flächen übernehmenden Betriebe führen. Nachteilig ist auch die beim Gärprozess, der so genannten Fermentation, auftretende Wärmeentwicklung und der damit verbundene Brennwertverlust, der regelmäßig durch eine Verfütterung von handelsverfügbarem Ergänzungsfutter ausgeglichen wird. Der Einkauf eines derartigen Ergänzungsfutters stellt jedoch in der Tierhaltung einen erheblichen Kostenfaktor dar, so dass ein wirtschaftliches Betreiben von Anlagen mit kleineren Tierbeständen kaum noch möglich ist.

Aus der französischen Patentschrift FR 2 083 183 A5 ist ein gattungsähnlicher Mähdrescher mit einem Mähwerk und einer am Mähwerk angeordneten Mähgutabsaugung bekannt. Während das Mähwerk ebenfalls einen Scherschneiden aufweisenden Mähbalken hat, weist die Mähgutabsaugung einen Strömungskanal mit mehreren darin angeordneten Dreschwalzen zum Ausdreschen der Getreideähren auf. Eine andere ganz ähnliche Erntevorrichtung ist in der deutschen Offenlegungsschrift DE 10 2012 100 972 A1 beschrieben. Diese weist ebenfalls einen Scherschneiden aufweisenden Mähbalken auf. Zum Abtransport des Mähgutes weist diese Erntevorrichtung jedoch ein Gebläse auf, welches auf die Scherschneiden und die Einlassöffnung eines Förderkanals ausgerichtete Luftdüsen hat. Weitere Vorrichtungen zum Mähen von Weiden und Feldern sind aus der britischen Patentschrift GB 834 608 A und der deutschen Offenlegungsschrift DE 1 782 799 A1 bekannt.

Der Erfindung liegt die Aufgabe zugrunde, eine Vorrichtung der eingangs genannten Gattung aufzuzeigen, mit der ein besonders langfaseriges Mähgut erhältlich ist, so dass seine Eignung für eine Weiterverarbeitung zu hochwertigen Futtermitteln verbessert ist.

Diese Aufgabe ist erfindungsgemäß durch eine Vorrichtung mit den Merkmalen des Patentanspruches 1 gelöst. Vorteilhafte Weiterbildungen der Erfindung sind in den Unteransprüchen angegeben.

Die erfindungsgemäße Vorrichtung zeichnet sich dadurch aus, dass das Mähwerk wenigstens eine parallel zu seinem Mähbalken verlaufende Trennscheibenwelle aufweist, und dass die Absaugkammern jeweils zwischen den Trennscheiben der Trennscheibenwelle ausgebildete Kammereintrittsöffnungen aufweisen.

Die Trennscheiben dienen dem Aufschneiden einer Vegetationsschicht in einzelne Bearbeitungsstreifen und damit einer eindeutigen Erfassung des jeweiligen Bearbeitungsstreifens von nur einer einzigen Absaugkammer. Mit den Trennscheiben ist zuverlässig verhindert, dass langfaserige Bestandteile des Mähgutes von den die Absaugkammern seitlich begrenzenden unteren Kammerrändern niedergedrückt werden und sich so der Mahd entziehen können. Mit der oszillierenden Bewegung der Scherschneiden bleibt ein möglicherweise mit pathogenen Keimen belastetes Fremdmaterial am Erdboden liegen. Erfasst wird von der Sogwirkung der Mähgutabsaugung lediglich das in einer vorbestimmten Höhe über dem Erdboden abgetrennte Mähgut. Dabei gewährleisten die in einer Reihe angeordneten Absaugkammern eine gleichmäßige Aufteilung der zur Verfügung stehenden Saugleistung über die gesamte Länge des Mähbalkens hinweg, so dass das Risiko des Ansaugens belasteten Fremdmaterials aus Bodennähe weiter verringert ist. Die erfindungsgemäße Vorrichtung gestattet so die Gewinnung eines besonders sauberen und keimfreien Mähgutes, welches für eine Weiterverarbeitung zu hochwertigen Futtermitteln, insbesondere zu Heu, geeignet ist.

Nach einer ersten Weiterbildung der Erfindung weist die Mähgutabsaugung wenigstens eine parallel zum Mähbalken verlaufende Lüfterreihe auf, wobei die Ansaugkammern an den Lüftern der Lüfterreihe gelegene Kammeraustrittsöffnungen aufweisen. Dabei gewährleisten die in der Lüfterreihe angeordneten Lüfter über die gesamte Länge des Mähbalkens hinweg eine voneinander unabhängige Sogwirkung in den einzelnen Absaugkammern, so dass temporäre Verstopfungen einzelner Kammeraustrittsöffnungen nicht zu einer Erhöhung der Sogwirkung an den noch unverstopften Kammeraustrittsöffnungen führen können. Folglich ist das Risiko des Ansaugens belasteten Fremdmaterials aus Bodennähe nochmals verringert.

Für einen Antrieb der Mähgutabsaugung weist diese wenigstens einen Zapfwellenanschluss auf, wobei die Lüfter über wenigstens ein Riemengetriebe auf den Zapfwellenanschluss aufgeschaltet sind. Die Aufschaltung des Riemengetriebes auf den Zapfwellenanschluss erfordert regelmäßig den Einbau eines Kardangelenkes sowie, in Abhängigkeit der Einbaulage der Lüfter, erforderlichenfalls auch den Einbau eines Winkelgetriebes. Zentrales Bauteil des Riemengetriebes ist ein Riemenscheibenpaket, dessen Abtriebsscheiben über Treibriemen auf Antriebsscheiben der Lüfterräder aufgeschaltet sind. Vorzugsweise läuft jeder Treibriemen über eine Spannrolle, so dass ein Austausch einzelner Treibriemen möglich ist.

Es ist beabsichtigt, an der Mähgutabsaugung wenigstens einen Ladewagenanschluss vorzusehen und die Lüfter mit ihren Förderleitungen auf den Ladewagenanschluss aufzuschalten. Der Ladewagenschluss dient regelmäßig einer Verbindung der Förderleitungen mit flexiblen Auswurfleitungen, die zum Verladen des Mähgutes an die Ladefläche eines Ladewagens, eines Häckselwagens oder eines anderen Transportfahrzeuges herangeführt werden.

Um die in den Absaugkammern gewünschte Sogwirkung auf besonders effiziente Weise herbeizuführen, sind die Lüfter der Lüfterreihe als Radialventilatoren ausgeführt. Es liegt jedoch im Rahmen der Erfindung, die Lüfter als Axial- oder Tangentialventilatoren auszuführen.

Zum Einstellen einer für die zu mähende Vegetationsschicht bzw. für das aufzunehmende Mähgut geeigneten Schnitthöhe ist das Mähwerk über eine Höhenverstelleinrichtung in einem Aufnahmerahmen gehalten. Der Aufnahmerahmen ermöglicht den Anbau des Mähwerkes an eine landwirtschaftliche Zugmaschine, insbesondere an einen Ackerschlepper.

Nach einer besonders vorteilhaften Weiterbildung der Erfindung weist die Höhenverstellung ein viergliedriges Koppelgetriebe auf, dessen Gehäuse der Aufnahmerahmen und dessen Koppel das Mähwerk ist. Mit dem viergliedrigen Koppelgetriebe ist zwischen dem Mähwerk und dem Aufnahmerahmen eine Zwangsführung mit einem kreisbahnförmigen Führungsverlauf ausgebildet. Dieser Führungsverlauf wird vorzugsweise von zweien das Gehäuse mit der Koppel verbindenden Schwingen geprägt. Die zueinander parallelen Schwingen weisen vorzugsweise eine gleiche Länge auf, so dass die Ausrichtung des Mähwerkes in Bezug auf eine horizontale Arbeitsebene beim Betätigen der Höhenverstellung unverändert bleibt. Außerdem weisen die Schwingen eine Schrägstellung auf, mit der das Mähwerk in Bezug auf seinen Aufnahmerahmen in einer Schleppstellung gehalten wird. Die Schleppstellung ermöglicht bei einer Kollision des Mähwerkes mit Hindernissen vorteilhaft eine besonders belastungsarme Ausweichbewegung des Mähwerkes in eine gegen die Fahrtrichtung schräg aufwärts gehende Richtung.

Für die Betätigung der Höhenverstelleinrichtung weist diese einen zwischen dem Aufnahmerahmen und dem Mähwerk angeordneten Wandler auf. Der Wandler ermöglicht ein motorisches Verfahren des Mähwerkes innerhalb seiner im Aufnahmerahmen ausgebildeten Zwangsführung.

Nach einer anderen besonders vorteilhaften Weiterbildung der Erfindung ist der Höhenverstelleinrichtung wenigstens ein zwischen dem Aufnahmerahmen und dem Mähwerk angeordneter Stoßdämpfer zugeordnet. Bei Bodenunebenheiten ermöglicht der Stoßdämpfer bei einem Aufsetzen des Mähwerkes ein schadloses Einfedern desselben innerhalb seiner im Aufnahmerahmen ausgebildeten Zwangsführung, womit insbesondere auch ein motorischer Antrieb vor Beschädigungen geschützt wird.

Für einen Anbau des Mähwerkes an eine Zugmaschine wird vorgeschlagen, den Aufnahmerahmen mit einer Lastaufnahmestruktur auszurüsten, die mit einer handelsverfügbaren Dreipunkthydraulik kompatibel ist. Die Erfindung beschränkt sich jedoch nicht auf derartige Lastaufnahmestrukturen, sondern umfasst sämtliche Lastaufnahmestrukturen, die für eine dauerhafte oder temporäre Aufnahme des Mähwerkes an einem Fahrwerk geeignet sind. Nach einer bevorzugten Weiterbildung der Erfindung sind der Wandler und der Stoßdämpfer als Pneumatikzylinderanordnung ausgeführt, wobei mit den kompressiblen Eigenschaften der zur Anwendung gelangenden Druckluft die Dämpfungswirkung erzielt wird, während mit der Zylinderanordnung die für eine Höhenverstellung erforderliche Stellkraft erzeugt wird. Die Pneumatikzylinderanordnung ist vorzugsweise über einen Kompressor der Zugmaschine betreibbar.

Für einen Antrieb des Mähbalkens weist dieser vorzugsweise einen Hydraulikmotor auf, der mit der Hydraulik der Zugmaschine kompatible Leitungsanschlüsse hat.

Ein Ausführungsbeispiel, aus dem sich weitere erfinderische Merkmale ergeben, ist in der Zeichnung dargestellt.

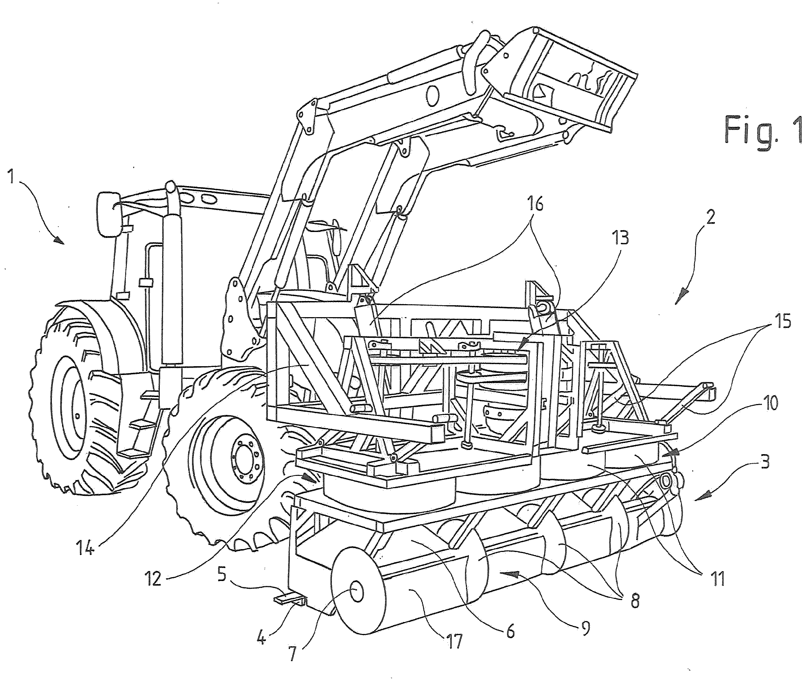

Die Figur 1 zeigt eine perspektivische Ansicht einer erfindungsgemäßen Vorrichtung in einem Anwendungsbeispiel mit einem Ackerschlepper 1 und einem frontseitig am Ackerschlepper 1 in einer Dreipunkthydraulik aufgenommenen Mähwerk 2 mit einer daran angeordneten Mähgutabsaugung 3. Während das Mähwerk 2 einen Scherschneiden 4 aufweisenden Mähbalken 5 hat, weist die Mähgutabsaugung 3 in einer Reihe parallel zum Mähbalken 5 angeordnete Absaugkammern 6 auf. Außerdem weist das Mähwerk 2 eine parallel zu seinem Mähbalken 5 verlaufenden Trennscheibenwelle 7 auf, wobei die Absaugkammern 6 jeweils zwischen den Trennscheiben 8 der Trennscheibenwelle 7 ausgebildete Kammereintrittsöffnungen 9 aufweisen. Die Mähgutabsaugung 3 weist außerdem eine parallel zum Mähbalken 5 verlaufende Lüfterreihe 10 auf, wobei die Absaugkammern 6 an den Lüftern 11 der Lüfterreihe 10 gelegene Kammer-austrittsöffnungen 12 aufweisen. Zum Antrieb der Mähgutabsaugung 3 sind die Lüfter 11 über ein Riemengetriebe 13 auf einen Zapfwellenanschluss aufgeschaltet. Zum Abführen des Mähgutes weist die Mähgutabsaugung 3 einen dem Ackerschlepper 1 zugekehrten Ladewagenanschluss auf, auf welchen die als Radialventilatoren ausgeführten Lüfter 11 mit ihren Förderleitungen aufgeschaltet sind.

Das Mähwerk 2 der erfindungsgemäßen Vorrichtung ist über eine Höhenverstellung in einem Aufnahmerahmen 14 gehalten. Die Höhenverstellung ist als viergliedriges Koppelgetriebe ausgeführt, dessen Gehäuse der Aufnahmerahmen 14 und dessen Koppel das Mähwerk 2 ist. Das Gehäuse und die Koppel sind über zwei Schwingenpaare 15 schwenkbeweglich miteinander verbunden. Die Höhenverstellung weist eine zwischen dem Aufnahmerahmen 14 und dem Mähwerk 2 angeordnete Pneumatikzylinderanordnung 16 auf. Zur Aufnahme der erfindungsgemäßen Vorrichtung am Ackerschlepper 1 weist der Aufnahmerahmen 14 eine mit der Dreipunkthydraulik des Ackerschleppers 1 zusammenwirkende Lastaufnahmestruktur auf. Vor den Kammereintrittsöffnungen 9 hängen flexible Dichtungslappen 17.

Alle in der vorstehenden Beschreibung und in den Ansprüchen genannten Merkmale sind in einer beliebigen Auswahl mit den Merkmalen des unabhängigen Anspruchs kombinierbar. Die Offenbarung der Erfindung ist somit nicht auf die beschriebenen bzw. beanspruchten Merkmalskombinationen beschränkt, vielmehr sind alle im Rahmen der Erfindung sinnvollen Merkmalskombinationen als offenbart zu betrachten.

## Patentansprüche

1. Vorrichtung zum Mähen von Weiden und Feldern mit wenigstens einem Mähwerk und wenigstens einer am Mähwerk angeordneten Mähgutabsaugung, wobei das Mähwerk wenigstens einen Scherschneiden aufweisenden Mähbalken hat, und die Mähgutabsaugung in wenigstens einer Reihe parallel zum Mähbalken angeordnete Absaugkammern aufweist,
**dadurch gekennzeichnet,**
**dass** das Mähwerk (2) wenigstens eine parallel zu seinem Mähbalken (5) verlaufende Trennscheibenwelle (7) aufweist, und
**dass** die Absaugkammern (6) jeweils zwischen den Trennscheiben (8) der Trennscheibenwelle (7) ausgebildete Kammereintrittsöffnungen (9) aufweisen.

2. Vorrichtung nach Anspruch 1, **dadurch gekennzeichnet, dass** die Mähgutabsaugung (3) wenigstens eine parallel zum Mähbalken (5) verlaufende Lüfterreihe (10) aufweist, und dass die Ansaugkammern (6) an den Lüftern (11) der Lüfterreihe (10) gelegene Kammeraustrittsöffnungen (12) aufweisen.

3. Vorrichtung nach Anspruch 2, **dadurch gekennzeichnet, dass** die Mähgutabsaugung (3) wenigstens einen Zapfenwellenanschluss aufweist, und dass die Lüfter (11) über wenigstens ein Riemengetriebe (13) auf den Zapfenwellenanschluss aufgeschaltet sind.

4. Vorrichtung nach Anspruch 2 oder 3, **dadurch gekennzeichnet, dass** die Mähgutabsaugung (3) wenigstens einen Ladewagenanschluss aufweist, und dass die Lüfter mit ihren Förderleitungen auf den Ladewagenanschluss aufgeschaltet sind.

5. Vorrichtung nach einem der Ansprüche 2 bis 4, **dadurch gekennzeichnet, dass** die Lüfter (11) der Lüfterreihe als Radialventilatoren ausgeführt sind.

6. Vorrichtung nach einem der Ansprüche 1 bis 5, **dadurch gekennzeichnet, dass** das Mähwerk (2) über eine Höhenverstellung in einem Aufnahmerahmen (14) gehalten ist.

7. Vorrichtung nach Anspruch 6, **dadurch gekennzeichnet, dass** die Höhenverstellung ein viergliedriges Koppelgetriebe aufweist, dessen Gehäuse der Aufnahmerahmen (14) und dessen Koppel das Mähwerk (2) ist.

8. Vorrichtung nach Anspruch 6 oder 7, **dadurch gekennzeichnet, dass** die Höhenverstellung wenigstens einen zwischen dem Aufnahmerahmen (14) und dem Mähwerk (2) angeordneten Wandler (15) aufweist.

9. Vorrichtung nach einem der Ansprüche 6 bis 8, **dadurch gekennzeichnet, dass** der Höhenverstellung wenigstens ein zwischen dem Aufnahmerahmen (14) und dem Mähwerk (2) angeordneter Stoßdämpfer zugeordnet ist.

10. Vorrichtung nach einem der Ansprüche 6 bis 9, **dadurch gekennzeichnet, dass** der Aufnahmerahmen (14) eine mit einer handelsverfügbaren Dreipunkthydraulik zusammenwirkende Lastaufnahmestruktur aufweist.

11. Vorrichtung nach Anspruch 9 oder 10, **dadurch gekennzeichnet, dass** der Wandler und der Stoßdämpfer als Pneumatikzylinderanordnung (16) ausgeführt sind.

12. Vorrichtung nach einem der Ansprüche 1 bis 11, **dadurch gekennzeichnet, dass** der Mähbalken (5) wenigstens einen Hydraulikmotor aufweist.

## Claims

1. A device for mowing meadows and fields with at least one mower unit and at least one mown material extraction device arranged on the mower unit, wherein
the mower unit has at least one mowing bar having shear cutting blades, and the mown material extraction device has suction chambers arranged in at least one row parallel to the mowing bar,
**characterised in that**,
the mower unit (2) has at least one separating disc shaft (7) extending parallel to its mowing bar (5), and **in that** the suction chambers (6) in each case have chamber inlet openings (9) formed between the separating discs (8) of the separating disc shaft (7).

2. The device in accordance with claim 1,
**characterised in that**,
the mown material extraction device (3) has at least one row of fans (10) running parallel to the mowing bar (5), and the suction chambers (6) have chamber outlet openings (12) located on the fans (11) of the fan row (10).

3. The device in accordance with claim 2,
**characterised in that**,
the mown material extraction device (3) has at least one stub shaft connection, and **in that** the fans (11) are connected to the stub shaft connection via at least one belt drive (13).

4. The device in accordance with claim 2 or 3,
**characterised in that**,
the mown material extraction device (3) has at least one loading wagon connection, and **in that** the fans are connected with their feeder lines to the loading wagon connection.

5. The device in accordance with one of the claims 2 to 4,
**characterised in that**,
the fans (11) of the fan row are embodied as radial fans.

6. The device in accordance with one of the claims 1 to 5,
**characterised in that**,
the mower unit (2) is held in an accommodating frame (14) by way of a means of height adjustment.

7. The device in accordance with claim 6,
**characterised in that**,
the means of height adjustment comprises a four-element coupling mechanism, the whose housing is the accommodating frame (14) and whose coupler is the mower unit (2).

8. The device in accordance with claim 6 or 7,
**characterised in that**,
the height adjustment means have at least one transducer (15) arranged between the accommodating frame (14) and the mower unit (2).

9. The device in accordance with one of the claims 6 to 8,
**characterised in that**,
at least one shock absorber arranged between the accommodating frame (14) and the mower unit (2) is assigned to the height adjustment means.

10. The device in accordance with one of the claims 6 to 9,
**characterised in that**,
the accommodating frame (14) has a load-bearing structure interacting with a commercially available three-point hydraulic system.

11. The device in accordance with claim 9 or 10,
**characterised in that**,
the transducer and the shock absorber are embodied as an arrangement of pneumatic cylinders (16).

12. The device in accordance with one of the claims 1 to 11,
**characterised in that**,
the mowing bar (5) has at least one hydraulic motor.

## Revendications

1. Dispositif de fauchage de prairies et champs comprenant au moins un organe de fauchage et au moins une aspiration de produit de fauchage disposée sur l'organe de fauchage, dans lequel l'organe de fauchage a au moins une barre de coupe présentant une cisaille, et l'aspiration de produit de fauchage présente des chambres d'aspiration disposées dans au moins une rangée parallèlement à la barre de coupe,
**caractérisé en ce que**
l'organe de fauchage (2) présente au moins un arbre à disques à tronçonner (7) au parcours parallèle à la barre de coupe (5), et
que les chambres d'aspiration (6) présentent respectivement des ouvertures d'entrée de chambre (9) formées entre les disques à tronçonner (8) de l'arbre à disques à tronçonner (7).

2. Dispositif selon la revendication 1, **caractérisé en ce que** l'aspiration de produit de fauchage (3) présente au moins une rangée de ventilateurs (10) parallèle à la barre de coupe (5), et que les chambres d'aspiration (6) présentent des ouvertures de sortie de chambre (12) disposées sur les ventilateurs (11) de la rangée de ventilateurs (10).

3. Dispositif selon la revendication 2, **caractérisé en ce que** l'aspiration de produit de fauchage (3) présente au moins un branchement de prise de force et que les ventilateurs (11) sont branchés sur la prise de force par au moins un entraînement à courroie (13).

4. Dispositif selon la revendication 2 ou 3, **caractérisé en ce que** l'aspiration de produit de fauchage (3) présente au moins un branchement de chariot de chargement et que les ventilateurs sont branchés sur le branchement de chariot de chargement par leur lignes de refoulement.

5. Dispositif selon l'une des revendications 2 à 4, **caractérisé en ce que** les ventilateurs (11) de la rangée de ventilateurs sont conçus en tant que ventilateurs radiaux.

6. Dispositif selon l'une des revendications 1 à 5, **caractérisé en ce que** l'organe de fauchage (2) est maintenu dans un cadre de réception (14) par le biais d'un réglage en hauteur.

7. Dispositif selon la revendication 6, **caractérisé en ce que** le réglage en hauteur présente un mécanisme articulé à quatre membres, dont le logement est le cadre de réception (14) et dont le couplage est l'organe de fauchage (2).

8. Dispositif selon la revendication 6 ou 7, **caractérisé en ce que** le réglage en hauteur présente au moins un convertisseur (15) disposé entre le cadre de réception (14) et l'organe de fauchage (2).

9. Dispositif selon l'une des revendications 6 à 8, **caractérisé en ce que** le réglage en hauteur a au moins un amortisseur disposé entre le cadre de réception (14) et l'organe de fauchage (2).

10. Dispositif selon l'une des revendications 6 à 9, **caractérisé en ce que** le cadre de réception (14) présente une structure de réception de charge coopérant avec une hydraulique en trois points disponible dans le commerce.

11. Dispositif selon la revendication 9 ou 10, **caractérisé en ce que** le convertisseur et l'amortisseur sont conçus en tant qu'agencement de vérins pneumatiques (16) .

12. Dispositif selon l'une des revendications 1 à 11, **caractérisé en ce que** la barre de coupe (5) présente au moins un moteur hydraulique.
